(19) **Europäisches Patentamt / European Patent Office / Office européen des brevets**

(11) **EP 1 628 139 B1**

(12) **FASCICULE DE BREVET EUROPEEN**

(45) Date de publication et mention
de la délivrance du brevet:
**15.07.2009 Bulletin 2009/29**

(51) Int Cl.:
***G01S 1/00*** *(2006.01)*

(21) Numéro de dépôt: **04104022.1**

(22) Date de dépôt: **20.08.2004**

(54) **Procédé de détermination de position d'un récepteur de signaux radiofréquences sans connaissance de la position initiale, et récepteur pour sa mise en oeuvre**

Verfahren zur Ortungsbestimmung eines Radiofrequenzsignal-Empfängers ohne Kenntnis der Anfangsposition, und Empfänger dafür

Process for determining the position of a Radio Frequency Receiver without knowledge of the initial position, and receiver for carrying it out

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**22.02.2006 Bulletin 2006/08**

(73) Titulaire: **ASULAB S.A.**
**2074 Marin (CH)**

(72) Inventeurs:
- **Monthéard, Anne**
  **1312, Eclépens (CH)**
- **Piccini, Fanel**
  **2202, Chambrelien (CH)**
- **Zellweger, Emil**
  **4514, Lommiswil (CH)**

(74) Mandataire: **Vigand, Philippe et al**
**ICB**
**Ingénieurs Conseils en Brevets SA**
**Fbg de l'Hôpital 3**
**2001 Neuchâtel (CH)**

(56) Documents cités:
**WO-A-20/04011957        DE-A1- 19 633 477**

**Description**

L'invention concerne un procédé de détermination de la position d'un récepteur de signaux radiofréquences, notamment du type GPS, sans connaissance de la position approchée initiale. Pour ce faire, le récepteur comprend des moyens de réception et de mise en forme des signaux radiofréquences provenant de satellites. Ces moyens de mise en forme des signaux produisent des signaux intermédiaires, qui sont convertis en fréquence, pour un étage de corrélation. Cet étage de corrélation est composé de N canaux de corrélation pour recevoir les signaux intermédiaires afin de les corréler avec des répliques de la fréquence porteuse et de codes spécifiques de satellites à chercher et à poursuivre. Des moyens à microprocesseur du récepteur sont reliés à l'étage de corrélation pour traiter les données tirées, après corrélation, des signaux radiofréquences, et commander le fonctionnement de certaines parties du récepteur.

L'invention concerne également le récepteur de signaux radiofréquences qui convient à la mise en oeuvre du procédé.

On entend par position approchée initiale, une position approximative ou grossière par exemple d'une région géographique où se trouve le récepteur avant le calcul de la position précise.

Le récepteur de signaux radiofréquences peut être utilisé dans un système de navigation par satellites de type GLONASS ou GALILEO ou GPS.

Dans le cas d'un système GPS, tout récepteur de signaux radiofréquences peut recevoir des signaux provenant de satellites en orbite. La distance au sol depuis le récepteur et un satellite visible peut être entre 20'000 km, lorsqu'un de ces satellites se trouve au Zénith, et 26'000 km, lorsqu'un de ces satellites se trouve en un point de la tangente avec la surface de la Terre, c'est-à-dire à l'horizon.

Actuellement, 30 satellites sont placés en orbite à une distance proche de 20'200 Km au-dessus de la surface de la Terre sur 6 plans orbitaux inclinés chacun de 55° par rapport à l'équateur. Le temps mis par un satellite pour accomplir une rotation complète en orbite afin de se retrouver au même point au-dessus de la Terre est environ de 12h. La répartition des satellites en orbite permet à un récepteur GPS terrestre de recevoir les signaux GPS d'au moins quatre satellites visibles pour déterminer sa position, sa vitesse et l'heure locale par exemple.

Pour des applications civiles, chacun de ces satellites émet des signaux radiofréquences composés notamment d'une première fréquence porteuse à 1,57542 GHz sur laquelle sont modulés le P-code à 10,23 MHz et le C/A code PRN à 1,023 MHz propre à chaque satellite avec le message GPS à 50 Hz. Ce message GPS contient les données d'éphémérides et d'almanachs utiles notamment pour le calcul de la position en X, Y et Z, de la vitesse et de l'heure locale.

Le C/A code PRN (pseudo random noise) de chaque satellite, qui est un code de Gold, est un code pseudo-aléatoire unique pour chaque satellite de manière à pouvoir différencier les signaux émis par les satellites à l'intérieur du récepteur. Le C/A code est un signal numérique qui est composé de 1023 chips, et qui se répète toutes les millisecondes. Tous les codes de Gold ont la caractéristique d'être presque orthogonaux, c'est-à-dire qu'en les corrélant l'un avec l'autre le résultat de la corrélation donne une valeur proche de 0. Cette caractéristique permet de pouvoir indépendamment traiter plusieurs signaux radiofréquences provenant de plusieurs satellites de façon simultanée dans plusieurs canaux d'un même récepteur GPS.

Dans les systèmes de navigation actuels qui emploient des récepteurs notamment du type GPS, il est souvent nécessaire d'introduire une position approchée initiale pour faciliter le calcul de la position précise du récepteur. De ce fait, cela impose à l'utilisateur du récepteur d'introduire par exemple les coordonnées d'un lieu mémorisé à proximité de sa position actuelle, ce qui est un inconvénient.

Dans la demande de brevet DE 196 33 477, il est décrit des moyens pour un récepteur de signaux radiofréquences permettant au récepteur d'effectuer une première recherche d'un premier ensemble de satellites sans connaissance de la position initiale approchée. Pour ce faire, des canaux de recherche du récepteur sont configurés pour la recherche d'un certain nombre de satellites d'au moins deux plans orbitaux sensiblement perpendiculaires afin que les signaux d'au moins un satellite visible puissent être captés par le récepteur.

Comme il est envisagé de monter un tel récepteur de signaux radiofréquences dans des objets portables, tels que des téléphones cellulaires ou également dans des montres-bracelets, toutes les opérations de calcul de la position précise doivent être facilitées. De plus, il doit être prévu de réduire fortement la consommation électrique durant ces opérations de calcul étant donné que le récepteur dans de tels objets est alimenté par un accumulateur ou une batterie de petite taille.

L'invention a donc pour but principal de pallier les inconvénients de l'art antérieur en proposant un procédé de détermination de position d'un récepteur de signaux radiofréquences sans qu'il soit nécessaire d'introduire une position initiale approchée dans le récepteur pour le calcul de sa position précise.

A cet effet, l'invention concerne un procédé de détermination de position d'un récepteur de signaux radiofréquences, notamment du type GPS cité ci-devant, qui comprend les caractéristiques mentionnées dans la revendication 1.

Des étapes particulières du procédé sont définies dans les revendications dépendantes 2 à 6.

Un avantage du procédé de détermination de position du récepteur de signaux radiofréquences selon l'invention réside dans le fait qu'initialement les N canaux de corrélation sont configurés et enclenchés en même temps pour rechercher chacun un satellite dans une des N régions géographiques ou zones définies selon l'almanach et les éphémérides mémorisés dans le récepteur. De cette manière dès qu'un des N canaux a détecté un satellite dont la projection sur la surface de la Terre est dans une des N régions, il est possible de déterminer dans quelle partie du globe, voire dans quelle région se trouve le récepteur. De plus, grâce au premier satellite, il peut être tiré des informations sur l'heure UTC (Coordinated Universal Time).

Un autre avantage du procédé de détermination de position du récepteur selon l'invention réside dans le fait qu'après la détection du premier satellite, au moins trois autres satellites visibles à proximité du premier satellite détecté sont cherchés par trois autres canaux de l'étage de corrélation. Une fois que les 4 satellites sont poursuivis par les 4 canaux, une position approchée peut être calculée par les moyens à microprocesseur par une méthode directe (par exemple la méthode Bancroft). Si cette méthode ne fournit pas de solution, en connaissant la position de chaque satellite en orbite, on peut estimer grossièrement la position du récepteur par une moyenne des latitudes et des longitudes de chaque satellite poursuivi à une hauteur fixée au niveau de la mer. De cette façon, une position approchée peut être avantageusement utilisée pour le calcul final de la position précise à l'aide d'une méthode itérative traditionnelle.

Comme le récepteur est de préférence monté dans un boîtier d'une montre-bracelet, qui comprend une pile ou un accumulateur de petite taille, les moyens à microprocesseur comprennent un microprocesseur 8-bit. Avec un tel microprocesseur à faible consommation, il est nécessaire de diminuer son temps de calcul notamment pour limiter la consommation électrique. Grâce au calcul d'une position approchée par la méthode directe, cela permet de réduire le nombre d'itérations de la méthode itérative afin de converger plus rapidement vers les données de position précise. Ainsi avec un tel microprocesseur à faible consommation, le problème des cycles limites conduisant à une valeur fausse de position peut être évité. Sans le calcul de la positon approchée, de multiples itérations des opérations de calcul de la méthode itérative conduisent en une détermination imprécise de la position du récepteur provenant de ce problème des cycles limites. Ce problème de cycles limites rencontré avec un tel microprocesseur 8-bit peut être dû par exemple à une impulsion d'horloge perdue lors du calcul de la position.

L'objet de l'invention concerne également un récepteur de signaux radiofréquences convenant à la mise en oeuvre du procédé qui comprend les caractéristiques mentionnées dans la revendication 7.

Des formes d'exécution avantageuses du récepteur sont définies dans les revendications dépendantes 8 à 10.

Un avantage du récepteur de signaux radiofréquences selon l'invention réside dans le fait que chaque canal de l'étage de corrélation comprend un bloc d'arrêt pour interrompre le fonctionnement du canal sur commande des moyens à microprocesseur. Chaque bloc d'arrêt reçoit des signaux d'horloge générés par un générateur de signaux d'horloge dans les moyens de réception et de mise en forme des signaux radiofréquences. Dans un état normal, chaque bloc d'arrêt permet aux signaux d'horloge de cadencer les opérations d'un corrélateur et d'un contrôleur du canal en fonction. Par contre, par exemple quand un premier satellite a été détecté par un des N canaux en fonction, chaque autre canal doit être arrêté grâce au bloc d'arrêt qui a pour tâche de couper les signaux d'horloge cadençant les opérations du canal.

Par économie d'énergie, il peut être envisagé de couper par périodes de temps volontairement certaines parties des moyens de réception et de mise en forme. Malgré cette coupure momentanée des moyens de réception et de mise en forme, le procédé de génération de la réplique du code dans l'étage de corrélation reste en fonction.

Les buts, avantages et caractéristiques du procédé de détermination de la position du récepteur de signaux radiofréquences, et du récepteur pour sa mise en oeuvre apparaîtront mieux dans la description suivante en regard des dessins sur lesquels :

- la figure 1 représente de manière simplifiée une vue en plan de la Terre avec N régions géographiques ou zones définies et une projection des satellites en orbite dans chaque région à un instant donné pour le procédé selon l'invention,
- la figure 2 représente schématiquement les diverses parties d'un récepteur de signaux radiofréquences convenant à la mise en oeuvre du procédé selon l'invention, et
- la figure 3 représente schématiquement les éléments d'un corrélateur d'un canal de l'étage de corrélation du récepteur convenant à la mise en oeuvre du procédé selon l'invention.

Dans la description suivante, le récepteur convenant à la mise en oeuvre du procédé de détermination de sa position géographique est de préférence un récepteur GPS. Plusieurs éléments du récepteur de signaux radiofréquences GPS, qui sont bien connus de l'homme du métier dans ce domaine technique, ne sont relatés que de manière simplifiée. Le récepteur pourrait néanmoins servir également dans un système de navigation GLONASS ou GALILEO ou un autre système de navigation. Grâce au procédé selon l'invention, le récepteur est susceptible de déterminer précisément sa position géographique sans connaissance d'une position approchée initiale ("Cold Start" en terminologie anglaise).

Le récepteur GPS peut équiper de préférence un objet portable, tel qu'une montre-bracelet afin de fournir au besoin des données de position, de vitesse et de l'heure locale au porteur de la montre. Comme la montre possède un accumulateur ou une pile de petite taille, la puissance consommée doit être la plus faible possible lors du fonctionnement du récepteur GPS.

Bien entendu, le récepteur GPS pourrait équiper d'autres objets portables de petite taille à faible consommation, tels que des téléphones portables, qui sont munis également d'un accumulateur d'énergie ou d'une pile.

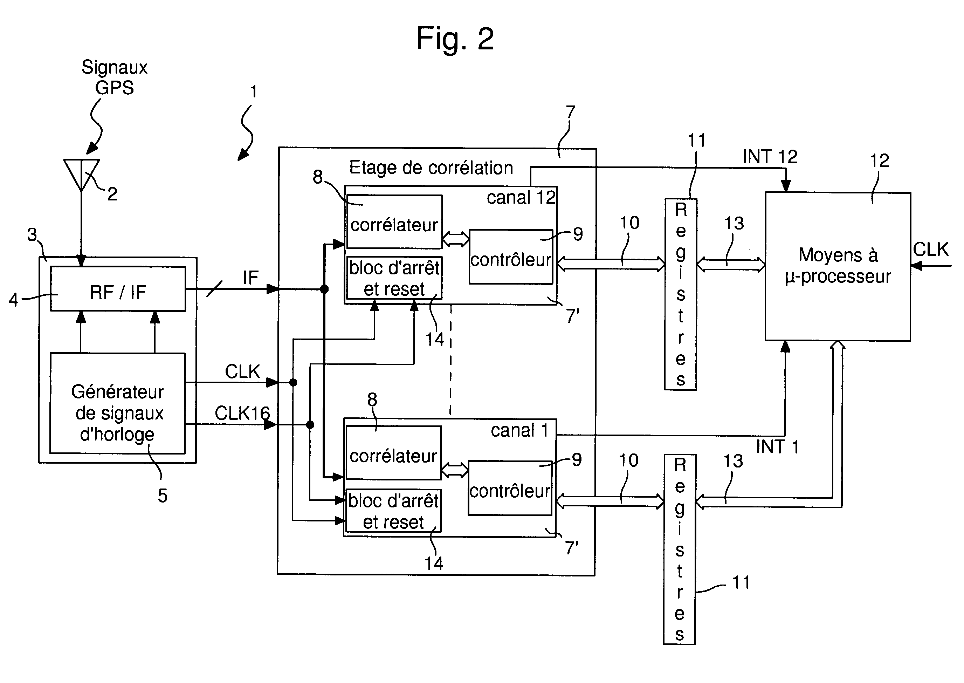

Le récepteur GPS 1 convenant à la mise en oeuvre du procédé est représenté schématiquement à la figure 2. Il comprend principalement des moyens de réception et de mise en forme des signaux radiofréquences 3 fournis par une antenne 2 pour produire des signaux intermédiaires IF à 4 bits convertis en fréquence, un étage de corrélation 7 constitué de 12 canaux 7' pour recevoir les signaux intermédiaires IF. Un bus transfert de données 10 relie chaque canal à un registre tampon 11 respectif, et finalement un bus de données 13 relie chaque registre tampon à des moyens à microprocesseur 12 destiné aux opérations de calcul de la position du récepteur 1.

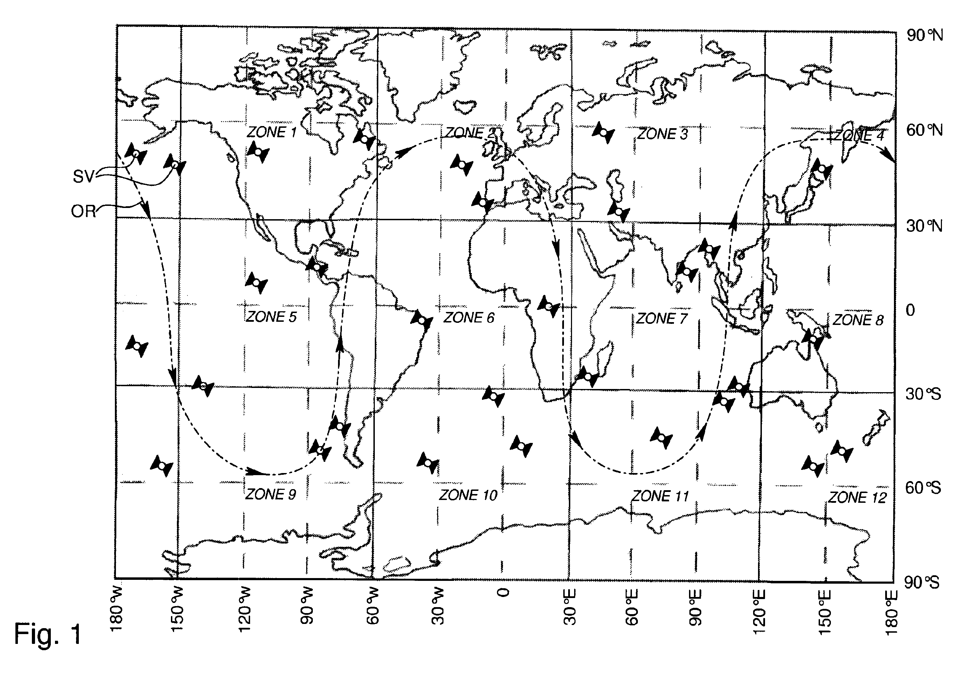

En référence à la figure 1 pour décrire le procédé selon l'invention, la surface de la Terre est divisée en N régions géographiques ou zones en fonction des N canaux à disposition dans l'étage de corrélation du récepteur. Comme le récepteur GPS comprend 12 canaux dans l'étage de corrélation, la surface de la Terre est donc divisée en 12 régions géographiques ou zones. Ces zones sont définies selon un almanach mémorisé dans le récepteur pour qu'au moins un satellite à acquérir se situe, en projection sur la surface de la Terre, dans chacune des 12 régions. Par le procédé décrit ci-dessous, il est possible de déterminer précisément la position du récepteur GPS sans qu'il soit nécessaire d'introduire une position initiale approchée dans le récepteur.

Sur la figure 1, il est montré à un instant donné la projection sur la surface de la Terre de 30 satellites SV susceptibles de pouvoir être utilisés dans un proche avenir, même si actuellement 29 satellites sont opérationnels pour la détermination de la position d'un récepteur GPS. On constate qu'en fonction des 12 zones définies, plus d'un satellite se trouve à n'importe quel instant dans chacune des 12 zones. De manière à ne pas surcharger la figure 1, il n'est montré en projection sur la surface de la Terre qu'une trace OR du trajet d'un des satellites sur une des 6 orbites.

Dans le tableau ci-dessous, il est montré la couverture géographique des 12 zones définies selon l'almanach mémorisé dans le récepteur :

|  | Latitudes | Longitudes | Centre |
|---|---|---|---|
| **Zone 1 (Amérique Nord)** | 90°N - 30°N | 150°W - 60°W | 60°N, 105°W |
| **Zone 2 (Europe)** | 90°N - 30°N | 60°W - 30°E | 60°N, 15°W |
| **Zone 3 (Russie)** | 90°N - 30°N | 30°E - 120°E | 60°N, 75°E |
| **Zone 4 (Japon)** | 90°N - 30°N | 120°E - 150°W | 60°N, 165°E |
| **Zone 5 (Amérique centrale)** | 30°N - 30°S | 150°W - 60°W | 0, 105°W |
| **Zone 6 (Afrique)** | 30°N - 30°S | 60°W - 30°E | 0, 15°W |
| **Zone 7 (Océan indien)** | 30°N - 30°S | 30°E - 120°E | 0, 75°E |
| **Zone 8 (Indonésie)** | 30°N - 30°S | 120°E - 150°W | 0, 165°E |
| **Zone 9 (Amérique Sud)** | 30°S - 90°S | 150°W - 60°W | 60°S, 105°W |
| **Zone 10 (Afrique Sud)** | 30°S - 90°S | 60°W - 30°E | 60°S, 15°W |
| **Zone 11 (Antarctique)** | 30°S - 90°S | 30°E - 120°E | 60°S, 75°E |
| **Zone 12 (Australie)** | 30°S - 90°S | 120°E - 150°W | 60°S, 165°E |

Il est à noter que même si l'almanach n'est pas continuellement remis à jour, il est possible de déterminer grossièrement la position de chaque satellite en orbite au-dessus de chacune des 12 zones. Chaque canal peut être configuré si possible pour la recherche d'un satellite à la plus haute élévation dans chaque zone, c'est-à-dire un satellite se trouvant au Zénith par rapport au récepteur ou au centre de chaque zone.

Une fois que les 12 zones sont définies, les moyens à microprocesseur configurent et commandent l'enclenchement des 12 canaux de l'étage de corrélation. Les 12 canaux sont configurés pour que chaque canal recherche un satellite visible dans une des 12 zones respectives.

Dès l'instant qu'un des canaux mis en fonction détecte un satellite visible, le fonctionnement de tous les autres canaux est interrompu par l'intermédiaire des moyens à microprocesseur. Cette interruption des autres canaux intervient au moment où les moyens à microprocesseur ont reçu le premier signal d'interruption du canal ayant détecté le premier satellite comme expliqué ci-dessous en référence à la figure 2. Avec le premier satellite poursuivi par un des canaux, il est possible de connaître l'heure UTC et la région géographique où se situe le récepteur.

Une fois que le premier satellite est poursuivi par un des canaux de l'étage de corrélation, les moyens à microprocesseur fournissent des données par l'intermédiaire des registres tampons pour configurer un certain nombre d'autres canaux. Au moins trois autres canaux de l'étage de corrélation sont configurés et enclenchés par les moyens à microprocesseur pour effectuer une recherche de satellites visibles à proximité du premier satellite poursuivi par le premier canal en fonction. De cette manière, les signaux radiofréquences émis par ces satellites ont moins de risques de rencontrer un obstacle sur leur trajet jusqu'au récepteur afin de calculer une position géographique précise.

Bien entendu plus de 4 canaux peuvent être mis en fonction pour capter plus de 4 satellites visibles. Toutefois par économie d'énergie, il peut être suffisant de poursuivre 4 satellites visibles pour permettre d'effectuer un calcul précis de la position géographique du récepteur.

Pour effectuer un calcul précis de la position du récepteur, après qu'au moins 4 satellites sont poursuivis par au moins 4 canaux de l'étage de corrélation, il est utilisé tout d'abord une méthode directe de calcul pour estimer une position grossière ou approchée du récepteur. Cette méthode permet de linéariser par la suite les différentes équations du calcul de la position.

Après l'estimation grossière de la position, le calcul de la position précise est réalisée par une méthode traditionnelle dite itérative, qui consiste à effectuer de multiples itérations. Ce nombre d'itérations est fortement réduit grâce au calcul préalable par la méthode directe de la position grossière du récepteur, ce qui permet d'éviter le problème d'imprécision dû aux cycles limites.

Pour effectuer le calcul de la position approchée, il peut être utilisé la méthode de calcul décrite par Stephen Bancroft dans l'article intitulé "An Algebraic Solution of the GPS Equations" tiré de la revue IEEE Transactions on Aerospace and Electronic Systems, Vol. AES-21, NO. 7 de janvier 1985. Cette méthode construit une équation algébrique du $2^{\text{ème}}$ degré à partir des pseudo-distances observées. La résolution de cette équation fournit deux solutions pour la position, dont une solution est aberrante et doit être écartée. Toutefois, si aucun bon résultat de calcul n'est donné par cette méthode Brancroft, il peut être fait recours à un calcul de la moyenne des latitudes $\varphi_i$ et longitudes $\lambda_i$ des différents satellites poursuivis à une hauteur égale à 0 qui correspond au niveau de la mer. Comme on connaît la position de chacun des satellites en orbite selon le système ECEF (Earth Centered Earth Fixed Cartesian Coordinates en terminologie anglaise) par rapport au centre de la Terre, il est facile de convertir la position de chaque satellite en latitude, longitude et élévation depuis le niveau de la mer.

La position approchée par cette méthode directe consiste donc à faire la moyenne des latitudes $\varphi_i$ et des longitudes $\lambda_i$ des satellites poursuivis par les canaux en fonction à l'aide des formules suivantes :

$$\varphi = (1/n)\Sigma_i\,\varphi_i \quad \text{et} \qquad \lambda = (1/n)\Sigma_i\,\lambda_i$$

où n est le nombre de satellites poursuivis, par exemple 4 satellites poursuivis.

Pour la mise en oeuvre du procédé décrit ci-dessus, il est expliqué de manière plus détaillée tous les éléments constituant le récepteur de signaux radiofréquences 1 en référence à la figure 2.

Comme mentionné auparavant, les moyens de réception et de mise en forme des signaux radiofréquences 3 produisent des signaux intermédiaires IF à 4 bits qui sont de préférence, sous forme complexe. Ces signaux intermédiaires IF sont composés d'une composante de signaux en phase I et d'une composante de signaux en quadrature Q à une fréquence inférieure ou égale à 400 kHz. Les signaux intermédiaires complexes IF sont représentés sur la figure 2 par une ligne en gras coupée d'une barre oblique définissant 4 bits.

Dans une forme préférée de réalisation, le nombre N de canaux 7' à disposition dans le récepteur 1 doit être supérieur au nombre maximum de satellites visibles en tout point de la Terre. De ce fait, l'étage de corrélation 7 est constitué de 12 canaux 7' susceptibles de pouvoir travailler en parallèle.

Conventionnellement dans les moyens de réception 3, un circuit électronique 4 convertit tout d'abord les signaux radiofréquences de fréquence 1,57542 GHz en une fréquence par exemple de 24,6 MHz. Le circuit électronique RF/IF 4 procède ensuite à une conversion pour amener les signaux GPS à une fréquence par exemple de 400 kHz ou inférieure en échantillonnant à 4,03 MHz. Des signaux intermédiaires complexes IF échantillonnés et quantifiés à fréquence inférieure ou égale à 400 kHz sont ainsi fournis aux canaux 7' de l'étage de corrélation 7.

Pour les opérations de conversion de fréquence, un générateur de signaux d'horloge 5 fait partie des moyens de réception et de mise en forme des signaux radiofréquences 3. Ce générateur est muni par exemple d'un oscillateur à quartz non représenté calibré à une fréquence de l'ordre de 16,2 MHz. Deux signaux d'horloge CLK et CLK16 sont fournis notamment à l'étage de corrélation 7 et aux moyens à microprocesseur 12 pour cadencer toutes les opérations de ces éléments. La première fréquence d'horloge CLK peut valoir 4,03 MHz, tandis que la seconde fréquence d'horloge peut être fixée 16 fois inférieure, c'est-à-dire à 252,4 kHz utilisée pour une grande partie de l'étage de corrélation afin de gagner en consommation d'énergie.

Il est à noter qu'il peut être envisagé d'obtenir le signal d'horloge CLK16 à l'aide d'un diviseur placé dans l'étage de corrélation 7 au lieu d'être intégré avec le générateur de signaux d'horloge 5 dans les moyens de réception 3.

Les signaux fournis par le circuit 4 donnent dans la moitié des cas des signaux de parité différente (+1 et -1).

Il doit donc être tenu compte de cette parité pour les opérations de démodulation des signaux GPS dans le récepteur. Dans une variante de réalisation, le circuit 4 peut donner des signaux répartis sur 4 bits de sortie pour la composante en phase et la composante en quadrature.

Les registres 11 de chaque canal sont susceptibles de recevoir des données ou des paramètres de configuration provenant des moyens à microprocesseur. Chaque canal est susceptible de transmettre via les registres des données concernant les messages GPS, l'état du code PRN, l'incrément de fréquence relatif à l'effet Doppler, les pseudo-distances et autres données après la corrélation et le verrouillage sur un satellite spécifique.

Les registres tampons 11 sont composés de plusieurs sortes de registres qui sont par exemple les registres de commande et d'états, les registres pour les oscillateurs NCO (Numerically Controlled Oscillator) des canaux, les registres de pseudo-distances, les registres d'énergie, les registres d'écart et d'incrément de la porteuse et du code et des registres de test. Il est à noter que ces registres peuvent accumuler des données pendant la phase de corrélation afin d'être utilisées pendant les procédures d'acquisition et de poursuite des satellites sans forcément être transférées automatiquement aux moyens à microprocesseur.

Dans une variante de réalisation, un unique bloc de registres 11 peut être envisagé pour tous les canaux 7' de l'étage de corrélation, étant donné que certaines données placées dans le bloc de registres sont communes à chaque canal.

Chaque canal 7' de l'étage de corrélation 7 comprend notamment un corrélateur 8 et un contrôleur 9 destiné à mettre en fonction par un matériel dédicacé notamment l'algorithme de traitement des signaux pour l'acquisition du signal du satellite et la poursuite du satellite détecté par le canal. Chaque canal 7' comprend également un bloc d'arrêt et reset 14 qui reçoit les signaux d'horloge CLK et CLK16 du générateur de signaux d'horloge 5 pour le cadencement des différentes opérations dans le corrélateur 8 et le contrôleur 9. Ce bloc d'arrêt 14 permet d'interrompre le fonctionnement du corrélateur 8 et du contrôleur 9 sur commande des moyens à microprocesseur en coupant les signaux d'horloge leur étant destinés.

Lors de la mise en fonction initiale du récepteur 1, tous les canaux 7' de l'étage de corrélation 7 sont configurés par les moyens à microprocesseur 12 pour la recherche chacun d'un satellite dans une des 12 régions géographiques définies. La configuration de chaque canal consiste à leur introduire en outre différents paramètres relatifs à la fréquence porteuse et au code PRN d'un satellite spécifique à chercher et à poursuivre.

Comme expliqué ci-devant dans le procédé de détermination de la position précise du récepteur dès qu'un des canaux a détecté un premier satellite visible, le fonctionnement de tous les autres canaux doit être interrompu. Pour ce faire, les canaux 7' en fonction émettent des signaux d'interruption INT1 à INT12 à destination du microprocesseur 12 pour l'avertir de données qu'il peut prélever.

Dès qu'il reçoit des signaux d'interruption, le microprocesseur doit en général parcourir tous les canaux pour savoir de quel canal proviennent les données à prélever. Ces données peuvent concerner par exemple des paramètres de configuration, des messages GPS, l'état du code pseudo-aléatoire PRN, l'incrément de fréquence relatif à l'effet Doppler, des pseudo-distances, des modes de coupure des moyens de réception, l'état d'intégrateurs compteurs et d'autres informations.

Dans le cas présent, le canal 7' ayant détecté le premier satellite transmet un signal d'interruption INT au microprocesseur pour qu'une commande d'interruption du fonctionnement des autres canaux soit transmise à chaque bloc d'arrêt 14 de ces autres canaux. De cette façon, les signaux d'horloge CLK et CLK16 de ces autres canaux sont coupés momentanément.

Au moins trois autres canaux 7' doivent être configurés et enclenchés par les moyens à microprocesseur pour la recherche de satellites visibles proche du premier satellite détecté. De ce fait, 4 canaux sont en fonction pour poursuivre chacun un des 4 satellites visibles nécessaires au calcul de la position du récepteur. Dans ce cas plusieurs signaux d'interruption INT1 à INT12 peuvent survenir en même temps et être transmis aux moyens à microprocesseur 12. Les moyens à microprocesseur peuvent comporter également un décodeur de priorité non représenté des canaux 7' en fonction. Ainsi, le microprocesseur peut accéder directement à un canal prioritaire émetteur d'un signal d'interruption selon un ordre déterminé de priorité.

Dans une autre forme de réalisation non représentée, le décodeur de priorité pourrait aussi être intégré dans l'étage de corrélation.

Le contrôleur 9 de chaque canal comprend entre autre une unité à mémoires, une unité arithmétique, une unité de synchronisation des bits de données, une unité de commande du corrélateur et une unité d'interruption non visibles sur la figure 2. L'unité à mémoires est composée notamment d'une mémoire RAM pour enregistrer des données momentanées. La mémoire RAM est répartie dans une structure non régulière ou régulière. L'unité arithmétique réalise notamment des opérations d'addition, de soustraction, de multiplication, d'accumulation et de décalage.

Toutes les tâches d'acquisition et de poursuite des satellites détectés sont donc réalisées de manière autonome dans chaque canal respectif de l'étage de corrélation dans une architecture à bits parallèles où le calcul de plusieurs bits est réalisé en une impulsion d'horloge. Les signaux numériques sont à 1 kHz ce qui permet le traitement de manière autonome desdits signaux des boucles d'asservissement de la fréquence porteuse et du code PRN à un taux de fréquence moins important. Lorsqu'un canal a verrouillé sur un satellite, le circuit synchronise le flux de données GPS destiné aux calculs subséquents.

Ainsi, le transfert de données avec les moyens à microprocesseur 12 ne se fait plus pendant toutes les étapes de corrélation. Ce n'est que le résultat de la corrélation de chaque canal 7' de l'étage de corrélation 7 qui est transféré au microprocesseur, en particulier les messages GPS à une fréquence de 50 Hz. Cela a pour conséquence une forte diminution de consommation de courant.

De ce fait, les moyens à microprocesseur 12 comprennent de préférence un microprocesseur 8-bit CoolRISC-816 de EM Microelectronic-Marin SA en Suisse. Ce microprocesseur est cadencé par un signal d'horloge à 4,03 MHz. Les moyens à microprocesseur 12 comprennent également des moyens de mémorisation non représentés dans lesquels toutes les informations concernant la position desdits satellites, leur code de Gold, et ceux qui sont susceptibles d'être visibles par le récepteur GPS terrestre sont enregistrées.

Grâce au procédé selon l'invention par lequel une position approchée est tout d'abord calculée par une méthode directe, le problème de cycles limites pour le calcul de la position précise dans un microprocesseur 8-bit est évité. Le nombre d'itérations par la méthode itérative pour le calcul de la position précise est ainsi diminué.

Il est à noter qu'en plus de la réduction de consommation constatée avec la répartition des tâches logicielles dans l'étage de corrélation, une réduction de consommation supplémentaire peut être accomplie en coupant par période de temps volontairement certaines parties des moyens de réception et de mise en forme 3 ("Active Coasting" en terminologie anglaise). Malgré cette coupure momentanée des moyens de réception et de mise en forme 3, le procédé de la génération de la réplique du code dans l'étage de corrélation reste en fonction.

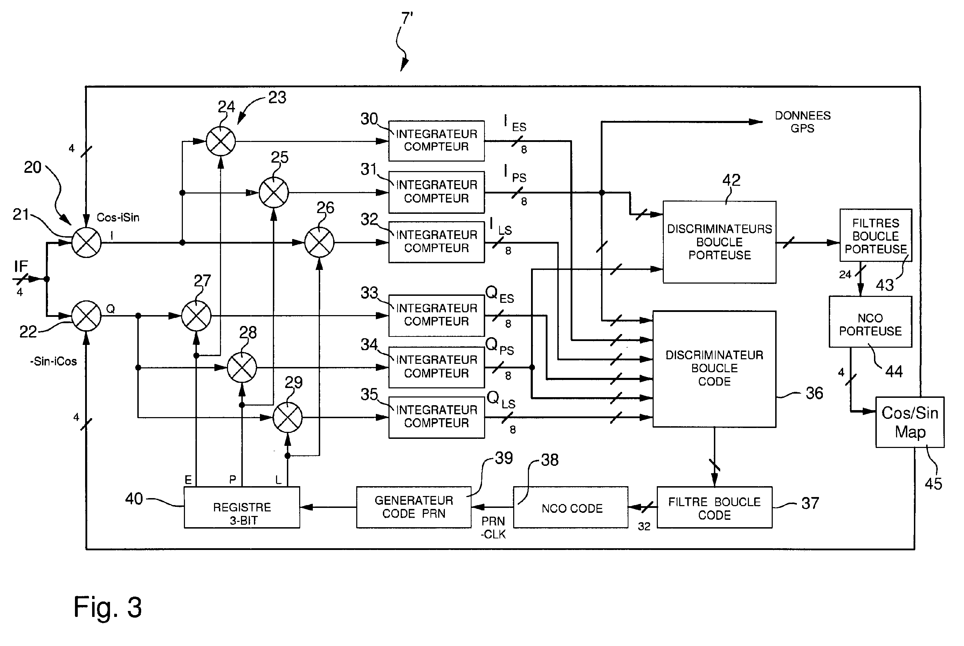

A la figure 3, le corrélateur est représenté avec une partie pour la boucle d'asservissement du code PRN et une autre partie pour la boucle d'asservissement de la fréquence de la porteuse. Le corrélateur est identique dans chaque canal de l'étage de corrélation, mais peut être configuré différemment dans chaque canal. Pour plus de détails relatifs aux divers éléments de ce corrélateur, le lecteur peut se référer à l'enseignement tiré du livre "Understanding GPS Principles and Applications" au chapitre 5 rédigé par Phillip Ward et de l'éditeur Elliott D. Kaplan (Artech House Publishers, USA 1996) au numéro d'édition ISBN 0-89006-793-7, et notamment aux figures 5.8 et 5.13.

En référence à la figure 3, les signaux intermédiaires IF, représentés sur la figure par une ligne en gras coupée d'une barre oblique définissant 4 bits, sont des signaux complexes (I + iQ) composés d'une composante de signaux en phase I et d'une composante de signaux en quadrature Q. Lesdits signaux intermédiaires IF ont été échantillonnés et quantifiés, et sont passés d'abord à travers des premiers mélangeurs 20 de la porteuse. Un mélangeur ou multiplicateur 21 multiplie les signaux IF par le Cosinus moins i fois le Sinus de la réplique de la porteuse générée en interne afin de tirer des signaux complexes le signal en phase I, tandis qu'un mélangeur ou multiplicateur 22 multiplie les signaux IF par le moins Sinus moins i fois le Cosinus de la réplique de la porteuse générée en interne afin de tirer des signaux complexes le signal en quadrature Q.

Ces signaux Sin et Cos proviennent d'un bloc 45 d'une table COS/SIN du signal de la réplique. Le but de cette première étape dans les premiers mélangeurs 20 est de retirer la fréquence porteuse des signaux portant le message GPS.

Il s'agit après cette opération de trouver l'équivalence du code PRN des signaux d'un satellite à acquérir dans un canal enclenché avec un code PRN généré dans ledit canal correspondant au satellite souhaité. Pour cela, les signaux en phase et en quadrature passent par des seconds mélangeurs 23 pour corréler les signaux I et Q avec une réplique en avance, une réplique ponctuelle et une réplique en retard du code PRN pour obtenir six signaux corrélés.

Bien entendu dans chaque canal de l'étage de corrélation, il n'aurait pu être gardé que la réplique en avance et en retard sans tenir compte de la réplique ponctuelle pour minimiser le nombre d'éléments de corrélation. Toutefois en supprimant la composante ponctuelle de la boucle d'asservissement du code, une perte du rapport signal sur bruit est constatée de l'ordre de 2,5 dB.

Le mélangeur ou multiplicateur 24 reçoit le signal I et le signal de réplique en avance E (du terme anglais « early ») d'un registre à 3 bits 40 et fournit un signal corrélé en phase en avance. Le mélangeur ou multiplicateur 25 reçoit le signal I et le signal de réplique ponctuelle P (du terme anglais « prompt ») du registre 40 et fournit un signal corrélé en phase ponctuelle. Le mélangeur ou multiplicateur 26 reçoit le signal I et le signal de réplique en retard L (du terme anglais « late »), et fournit un signal corrélé en phase en retard.

Le mélangeur ou multiplicateur 27 reçoit le signal Q et le signal de réplique en avance E, et fournit un signal corrélé en quadrature en avance. Le mélangeur ou multiplicateur 28 reçoit le signal Q et le signal de réplique ponctuelle P, et fournit un signal corrélé en quadrature ponctuelle. Enfin, le mélangeur ou multiplicateur 29 reçoit le signal Q et le signal de réplique en retard L, et fournit un signal corrélé en quadrature en retard.

L'écart entre la réplique en avance E et la réplique en retard L est d'un demi chip dans la réalisation de la présente invention, ce qui fait que l'écart avec une composante centrale ponctuelle P est de 1/4 chip. Les multiplicateurs peuvent être réalisés par simplification à l'aide de portes logiques XOR par exemple.

Les six signaux corrélés entrent chacun dans un des intégrateurs compteurs 30 à 35 qui sont des éléments de pré-détection, dont les mots binaires de sortie $I_{ES}$, $I_{PS}$, $I_{LS}$, $Q_{ES}$, $Q_{PS}$ et $Q_{LS}$ sont représentés généralement sur 14 bits. Le nombre de bits du mot binaire en sortie des intégrateurs compteurs définit la dynamique de réception du récepteur. Il est défini pour pouvoir compter jusqu'à un nombre de 1023 ce qui équivaut au nombre de chips du code PRN. Chaque intégrateur compteur 30 à 35 d'un canal sélectionné par les moyens à microprocesseur au début d'une recherche est configuré pour fournir un jeu complet de mots binaires $I_{ES}$, $I_{PS}$, $I_{LS}$, $Q_{ES}$, $Q_{PS}$ et $Q_{LS}$ toutes les millisecondes. Toutefois pour éliminer une partie du bruit du signal utile à démoduler, uniquement les 8 bits de poids forts sont utilisés pour la suite de la chaîne de traitement des signaux numériques.

Les mots binaires de sortie $I_{ES}$, $I_{PS}$, $I_{LS}$, $Q_{ES}$, $Q_{PS}$ et $Q_{LS}$, représentés sur la figure 3 par une ligne en gras coupée par une barre oblique définissant 8 bits, sont passés dans un discriminateur de boucle de code 36 et dans un filtre de boucle de code 37. Le discriminateur de boucle de code réalise les opérations de calcul de l'énergie des signaux $I_{ES}$, $I_{PS}$, $I_{LS}$, $Q_{ES}$, $Q_{PS}$ et $Q_{LS}$. Une accumulation de valeurs pendant un certain nombre M de cycles d'intégration, par exemple 10 cycles, est réalisée dans le discriminateur de code.

Le discriminateur 36 peut être non-cohérent du type à blocage de boucle de retard (DLL). Il est constitué notamment par un multiplicateur 8-bit et par un accumulateur 20-bit. Sur ce discriminateur, une correction est amenée de la boucle de la porteuse, car lors de l'émission du signal par le satellite l'effet Doppler se fait sentir non seulement sur la fréquence porteuse, mais également sur le code PRN qui est modulé sur la fréquence porteuse. L'apport de la porteuse dans le discriminateur de boucle de code correspond à une division par 1540 de l'incrément d'écart de la porteuse.

Suivant le résultat filtré du discriminateur, un incrément de phase est imposé par l'oscillateur 38 NCO 32-bit au générateur de code PRN 39 afin qu'il transmette la série de bits du code PRN au registre 40 pour faire une nouvelle corrélation. La résolution de fréquence de ce NCO 32-bit est de l'ordre de 0,9 mHz. (pour une fréquence d'horloge de 4,03 MHz).

Les divers résultats de la boucle sont traités par le contrôleur afin qu'il coordonne les opérations d'acquisition et de poursuite. Une fois, qu'il y a synchronisation et verrouillage sur le satellite souhaité les valeurs $I_{ES}$ et $I_{LS}$ sont introduits dans un élément de démodulation 50. Cet élément 50 est capable de fournir le message de données à 50 Hz sur 1 bit par l'intermédiaire du registre d'entrée et de sortie de données aux moyens à microprocesseur. En plus du message, les moyens à microprocesseur peuvent prendre notamment les informations concernant les pseudo-distances insérées dans le registre tampon afin de calculer la position X,Y et Z, la vitesse et l'heure locale précise.

Tous les éléments expliqués ci-dessus ne seront pas décrits de manière plus détaillée, étant donné qu'ils font partie des connaissances générales d'un homme du métier dans ce domaine technique.

Les mots binaires $I_{PS}$ et $Q_{PS}$ sur 8 bits sont introduits à une fréquence de 1 kHz dans des discriminateurs de boucle de porteuse 42 (détection d'enveloppe) pour calculer l'énergie des signaux suivi de filtres de boucle de porteuse 43. L'ensemble constitué par les discriminateurs de boucle de porteuse 42 et des filtres de boucle de porteuse 43 peut être réalisé comme décrit dans l'article intitulé "Performance Comparisons Between FLL, PLL and a Novel FLL-Assisted-PLL Carrier Tracking Loop Under RF Interference Conditions" rédigé par Phillip W. Ward.

Une opération de moyenne sur les discriminateurs de fréquence et de phase est réalisée afin d'accroître la sensibilité et la précision des boucles de poursuite de la porteuse. L'accumulation prévue dans les discriminateurs dure un nombre M de cycles, par exemple 10 cycles pour la PLL et 5 cycles pour la FLL.

Suivant le résultat des discriminateurs 42 et après passage à travers les filtres 43, l'oscillateur NCO 24-bit de la porteuse 44 reçoit un incrément de fréquence (bin) pour la correction de la réplique de la fréquence porteuse. Ce NCO 24-bit a une résolution de fréquence de l'ordre de 240 mHz, et fournit des données sur 4 bits à la table Cos/Sin 45.

Les deux procédés d'asservissement du code et de la porteuse sont synchronisés durant la poursuite, ceci bien que les boucles de poursuite de la porteuse sont seulement mises à jour après une confirmation de la présence du signal du satellite.

A partir de la description qui vient d'être faite, de multiples variantes de réalisation du procédé ou du récepteur pour sa mise en oeuvre peuvent être conçues par l'homme du métier sans sortir du cadre de l'invention définie par les revendications. Après la détection du premier satellite, il peut être possible de calculer les élévations autour de ce premier satellite afin de fournir une position approchée du récepteur. Le récepteur de signaux radiofréquences peut comprendre au minimum 4 canaux dans l'étage de corrélation, ou plus de 12 canaux. Le bloc d'arrêt dans chaque canal peut être constitué d'un interrupteur unique suivi de diviseurs pour générer les deux signaux d'horloge de cadencement des opérations dans le canal.

**Revendications**

1. Procédé de détermination de position d'un récepteur de signaux radiofréquences (1), notamment du type GPS, le récepteur comprenant des moyens de réception et de mise en forme des signaux radiofréquences (3) provenant de satellites pour produire des signaux intermédiaires (IF) convertis en fréquence, un étage de corrélation (7) composé de N canaux de corrélation (7') pour recevoir les signaux intermédiaires afin de les corréler avec des répliques de la fréquence porteuse et de codes spécifiques de satellites à chercher et à poursuivre, et des moyens à microprocesseur (12) reliés à l'étage de corrélation pour traiter les données tirées, après corrélation, des signaux radiofréquences, le procédé étant **caractérisé en ce qu'**il comprend une série d'étapes consistant à :

- diviser la surface de la Terre en N régions géographiques en fonction des N canaux à disposition dans l'étage de corrélation de manière que, selon un almanach mémorisé dans le récepteur, au moins un satellite à acquérir se situe, en projection sur la surface de la Terre, dans chacune des N régions,
- enclencher les N canaux de l'étage de corrélation, les N canaux étant configurés pour la recherche chacun d'un satellite visible dans une des N régions respectives,
- dès qu'un des canaux a détecté un satellite visible dans une des N régions, interrompre le fonctionnement de tous les autres canaux, et
- configurer et enclencher certains autres canaux pour la recherche et la poursuite de satellites visibles à proximité du premier satellite visible détecté pour réaliser les opérations de calcul de la position et du temps dans les moyens à microprocesseur.

2. Procédé selon la revendication 1, **caractérisé en ce qu'**une position approchée du récepteur est calculée tout d'abord par une méthode directe dès qu'au moins quatre satellites sont détectés et poursuivis respectivement par quatre canaux de l'étage de corrélation, et **en ce qu'**une position précise du récepteur est déterminée sur la base de la position approchée par une méthode itérative dans les moyens à microprocesseur.

3. Procédé selon la revendication 2, **caractérisé en ce que** la position approchée du récepteur est calculée pour une hauteur située au niveau de la mer sur la base de la moyenne des données de latitudes $\varphi_i$ et de longitudes $\lambda_i$ des satellites poursuivis par les canaux en fonction à l'aide des formules suivantes :

$$\varphi = (1/n)\Sigma_i\,\varphi_i$$

et

$$\lambda = (1/n)\Sigma_i\,\lambda_i$$

où n est le nombre de satellites poursuivis.

4. Procédé selon l'une des revendications précédentes, **caractérisé en ce qu'**après l'étape de division de la surface de la Terre en N régions, N étant un nombre entier supérieur ou égal à 4, de préférence égal à 12, les N canaux de l'étage de corrélation sont enclenchés pour la recherche chacun d'un satellite dans une des régions respectives ayant la plus haute élévation, notamment les satellites se trouvant en projection sur la surface de la Terre à proximité du centre de chaque région.

5. Procédé selon l'une des revendications précédentes, **caractérisé en ce que,** dès qu'un des N canaux enclenchés a détecté un premier satellite visible dans une des N régions, un signal d'interruption (INT) est transmis par le canal ayant détecté le premier satellite visible, aux moyens à microprocesseur pour qu'ils commandent l'interruption du fonctionnement de tous les autres canaux.

6. Procédé selon l'une des revendications précédentes, pour lequel chaque canal (7') de l'étage de corrélation (7) comprend un bloc d'arrêt (14) permettant d'interrompre des signaux d'horloge (CLK, CLK16) du fonctionnement du canal, et de réinitialiser le canal, **caractérisé en ce qu'**une fois que le premier satellite visible a été détecté par un des canaux en fonction, le fonctionnement de tous les autres canaux est interrompu par l'intermédiaire de chaque bloc d'arrêt de ces canaux, chaque bloc d'arrêt étant commandé par les moyens à microprocesseur.

7. Récepteur de signaux radiofréquences (1), notamment du type GPS, convenant à la mise en oeuvre du procédé selon l'une des revendications précédentes, le récepteur comprenant des moyens de réception et de mise en forme des signaux radiofréquences provenant de satellites (3) pour produire des signaux intermédiaires convertis en fréquence (IF), un étage de corrélation (7) composé de N canaux de corrélation (7') pour recevoir les signaux intermédiaires afin de les corréler avec des répliques de la fréquence porteuse et de codes spécifiques de satellites à chercher et à poursuivre, et des moyens à microprocesseur (12) reliés à l'étage de corrélation pour traiter les données tirées, après corrélation, des signaux radiofréquences, **caractérisé en ce que** chaque canal (7') de l'étage de corrélation (7) comprend un bloc d'arrêt (14) permettant d'interrompre des signaux d'horloge (CLK, CLK16) du fonctionnement du canal, chaque bloc d'arrêt étant commandé par les moyens à microprocesseur.

8. Récepteur de signaux radiofréquences selon la revendication 7, **caractérisé en ce que** dans chaque canal (7'), un contrôleur (9), qui comprend un algorithme de traitement de signaux numériques, est associé au corrélateur (8) pour permettre, lors de la mise en fonction du canal (7'), d'opérer de manière autonome toutes les tâches de synchronisation pour la recherche et la poursuite d'un satellite indépendamment des moyens à microprocesseur (12).

9. Récepteur de signaux radiofréquences selon la revendication 7, **caractérisé en ce que** les moyens de réception et de mise en forme (3) comprennent un générateur de signaux d'horloge (5) pour fournir des premier et second signaux d'horloge (CLK, CLK16) à chaque canal de l'étage de corrélation par l'intermédiaire du bloc d'arrêt (14) de chaque canal, le second signal d'horloge (CLK16) étant de fréquence 16 fois inférieure à la fréquence du premier signal d'horloge (CLK).

10. Récepteur de signaux radiofréquences selon la revendication 7, **caractérisé en ce que** les moyens à microprocesseur fournissent des signaux d'interruption aux moyens de réception et de mise en forme pour interrompre périodiquement l'opération de conversion de fréquence des signaux radiofréquences.

**Claims**

1. Method of determining the position of a radio-frequency signal receiver (1), particularly of the GPS type, the receiver including means (3) for receiving and shaping radio-frequency signals from satellites to generate frequency converted intermediate signals (IF), a correlation stage (7) composed of N correlation channels (7') for receiving the intermediate signals in order to correlate them with specific code and carrier frequency replicas from satellites to be searched and tracked, and microprocessor means (12) connected to the correlation stage for processing the data drawn, after correlation, from the radio-frequency signals, the method being **characterized in that** it includes a series of steps consisting in:

   - dividing the surface of the Earth into N geographical regions as a function of the N channels available in the correlation stage such that, according to an almanac stored in the receiver, at least one satellite to be acquired is located, in projection onto the surface of the Earth, in each of the N regions,
   - switching on the N channels of the correlation stage, the N channels each being configured to search one visible satellite in one of the N respective regions,
   - as soon as one of the channels has detected a visible satellite in one of the N regions, interrupting the operation of all the other channels, and
   - configuring and switching on certain other channels for the search and tracking of visible satellites in proximity to the first visible satellite detected to perform the time and position calculating operations in the microprocessor means.

2. Method according to claim 1, **characterized in that** an approximate position of the receiver is calculated first of all by a direct method as soon as at least four satellites are detected and tracked respectively by four channels of the correlation stage, and **in that** a precise position of the receiver is determined on the basis of the approximate position by an iterative method in the microprocessor means.

3. Method according to claim 2, **characterized in that** the receiver approximate position is calculated for a height located at sea level on the basis of the mean latitude $\varphi_i$ and longitude $\lambda_i$ data of the satellites being tracked by the operating channels using the following formulae:

$$\bar{\varphi} = (1/n)\Sigma_i \, \varphi_i$$

and

$$\bar{\lambda} = (1/n)\Sigma_i \, \lambda_i$$

where n is the number of satellites being tracked.

4. Method according to any of the preceding claims, **characterized in that** after the step of dividing the surface of the Earth into N geographical regions, N being an integer number greater than or equal to 4 and preferably equal to 12, the N channels of the correlation stage are switched on to each search for a satellite in one of the respective regions having the highest elevation, particularly the satellites located in projection onto the Earth's surface in proximity to the centre of each region.

5. Method according to any of the preceding claims, **characterized in that,** as soon as one of the N switched on channels has detected a first visible satellite in one of the N regions, an interruption signal (INT) is transmitted by the channel having detected the first visible satellite, to the microprocessor means such that said means interrupt the operation of the all the other channels.

6. Method according to any of the preceding claims, for which each channel (7') of the correlation stage (7) comprises a stop block (14) for interrupting the operating channel clock signals (CLK, CLK16) and reinitialising the channel, **characterized in that** once the first visible satellite has been detected by one of the operating channels, the operation of all the other channels is interrupted via each stop block of said channels, each stop block being controlled by the microprocessor means.

7. Radio-frequency signal receiver (1), particularly of the GPS type, suitable for implementing the method according to any of the preceding claims, the receiver including means (3) for receiving and shaping radio-frequency signals from satellites to generate frequency converted intermediate signals (IF), a correlation stage (7) composed of N correlation channels (7') for receiving the intermediate signals in order to correlate said signals with specific code and carrier frequency replicas of satellites to be searched and tracked, and microprocessor means (12) connected to the correlation stage for processing the data extracted, after correlation, from the radio-frequency signals, **characterized in that** each channel (7') of the correlation stage (7) includes a stop block (14) for interrupting the operating channel clock signals (CLK, CLK16), each stop block being controlled by the microprocessor means.

8. Radio-frequency signal receiver according to claim 7, **characterized in that** in each channel (7'), a controller (9), which includes a digital signal processing algorithm, is associated with the correlator (8) for autonomously performing, when the channel (7') is switched on, all the synchronisation tasks for satellite search and tracking independently of the microprocessor means (12).

9. Radio-frequency signal receiver according to claim 7, **characterized in that** the reception and shaping means (3) include a clock signal generator (5) for providing first and second clock signals (CLK, CLK16) to each channel of the correlation stage via a stop block (14) of each channel, the frequency of the second clock signal (CLK16) being 16 times less than the frequency of the first clock signal (CLK).

10. Radio-frequency signal receiver according to claim 7, **characterized in that** the microprocessor means provide interruption signals to the reception and shaping means to periodically interrupt the radio-frequency signal frequency conversion operation.

**Patentansprüche**

1. Verfahren zum Bestimmen der Position eines Hochfrequenzsignal-Empfängers (1), insbesondere vom Typ GPS, wobei der Empfänger Mittel zum Empfangen und Formen der von Satelliten stammenden Hochfrequenzsignale (3) aufweist, um frequenzgewandelte Zwischensignale (IF) zu erzeugen, sowie eine Korrelationsstufe (7), die sich aus N Korrelationskanälen (7') zusammensetzt, um die Zwischensignale zu empfangen, damit sie mit Kopien der Trägerfrequenz und spezifischer Codes von aufzuspürenden und zu verfolgenden Satelliten korreliert werden, und Mikroprozessormittel (12), die mit der Korrelationsstufe verbunden sind, um die nach Korrelation aus den Hochfrequenzsignalen entnommenen Daten zu verarbeiten, wobei das Verfahren **dadurch gekennzeichnet ist, dass** es eine Reihe von Schritten umfasst, die in folgendem bestehen:

- Unterteilen der Erdoberfläche in N geographische Bereiche in Abhängigkeit von den in der Korrelationsstufe verfügbaren N Kanälen, so dass je nach einem in dem Empfänger abgespeicherten Almanach zumindest ein zu erfassender Satellit sich in Projektion auf die Erdoberfläche in jedem der N Bereiche befindet,
- Aktivieren der N Kanäle der Korrelationsstufe, wobei die N Kanäle zum Aufspüren jeweils eines in einem der N Bereiche sichtbaren Satelliten konfiguriert sind,

- sobald einer der Kanäle einen in einem der N Bereiche sichtbaren Satelliten erfasst hat, Unterbrechen des Betriebs sämtlicher weiterer Kanäle, und

- Konfigurieren und Aktivieren bestimmter weiterer Kanäle zum Aufspüren und Verfolgen von in der Nähe des erfassten ersten sichtbaren Satelliten sichtbaren Satelliten, um Rechenoperationen zum Berechnen der Position und der Zeit in den Mikroprozessormitteln durchzuführen.

2. Verfahren nach Anspruch 1, **dadurch gekennzeichnet, dass** zunächst eine dem Empfänger angenäherte Position durch eine direkte Methode berechnet wird, sobald zumindest vier Satelliten durch vier jeweilige Kanäle der Korrelationsstufe erfasst und verfolgt werden, und dass eine genaue Position des Empfängers auf Grundlage der angenäherten Position durch eine iterative Methode in den Mikroprozessormitteln ermittelt wird.

3. Verfahren nach Anspruch 2, **dadurch gekennzeichnet, dass** die angenäherte Position des Empfängers bei einer Höhe im Bereich des Meeresspiegels auf der Grundlage des Durchschnittswertes der Breitenangaben $\varphi_i$ und Längenangaben $\lambda_i$ der verfolgten Satelliten über die betriebenen Kanäle mit Hilfe der nachfolgenden Formeln berechnet wird:

$$\varphi = (1/n)\Sigma_i\varphi_i$$

und

$$\lambda = (1/n)\ \Sigma_i\lambda_i$$

worin n die Anzahl an verfolgten Satelliten ist.

4. Verfahren nach einem der vorangehenden Ansprüche, **dadurch gekennzeichnet, dass** nach dem Schritt der Unterteilung der Erdoberfläche in N Bereiche, wobei N eine ganze Zahl größer oder gleich 4, vorzugsweise gleich 12 ist, die N Kanäle der Korrelationsstufe für das Aufspüren jeweils eines Satelliten in einem der jeweiligen Bereiche mit dem größten Höhenmaß aktiviert werden, insbesondere derjenigen Satelliten, die in Projektion auf die Erdoberfläche in der Nähe des Mittelpunkts eines jeden Bereichs liegen.

5. Verfahren nach einem der vorangehenden Ansprüche, **dadurch gekennzeichnet, dass** sobald einer der N aktivierten Kanäle einen ersten in einem der N Bereiche sichtbaren Satelliten erfasst hat, ein Unterbrechungssignal (INT) über den Kanal, der den ersten sichtbaren Satelliten erfasst hat, zu den Mikroprozessormitteln übertragen wird, damit diese das Unterbrechen des Betriebs sämtlicher weiterer Kanäle steuern.

6. Verfahren nach einem der vorangehenden Ansprüche, wobei jeder Kanal (7') der Korrelationsstufe (7) einen Sperrblock (14) aufweist, mit dem Zeitsignale (CLK, CLK16) für den Betrieb des Kanals unterbrochen werden können und der Kanal reinitialisiert werden kann, **dadurch gekennzeichnet, dass** dann, wenn der erste sichtbare Satellit von einem der in Betrieb befindlichen Kanäle erfasst wurde, der Betrieb sämtlicher weiterer Kanäle über jeden Sperrblock dieser Kanäle unterbrochen wird, wobei jeder Sperrblock über die Mikroprozessormittel gesteuert wird.

7. Hochfrequenzsignalempfänger (1), insbesondere vom Typ GPS, der zum Durchführen des Verfahrens nach einem der vorangehenden Ansprüche geeignet ist, wobei der Empfänger Mittel zum Empfang und Formen von von Satelliten (3) stammenden Hochfrequenzsignalen aufweist, um frequenzgewandelte Zwischensignale zu erzeugen, sowie eine Korrelationsstufe (7), die sich aus N Korrelationskanälen (7') zusammensetzt, um die Zwischensignale zu empfangen, damit sie mit Kopien der Trägerfrequenz und spezifischer Codes von aufzuspürenden und zu verfolgenden Satelliten korreliert werden, und Mikroprozessormittel (12), die mit der Korrelationsstufe verbunden sind, um die nach Korrelation aus den Hochfrequenzsignalen entnommenen Daten zu verarbeiten, **dadurch gekennzeichnet, dass** jeder Kanal (7') der Korrelationsstufe (7) einen Sperrblock (14) aufweist, mit dem Zeitsignale (CLK, CLK16) für den Betrieb des Kanals unterbrochen werden können, wobei jeder Sperrblock über die Mikroprozessormittel gesteuert wird.

8. Hochfrequenzsignalempfänger nach Anspruch 7, **dadurch gekennzeichnet, dass** in jedem Kanal (7') dem Korrelator (8) ein Controller (9) zugeordnet ist, der einen Algorithmus zum Verarbeiten von digitalen Signalen umfasst, um zu ermöglichen, bei der Inbetriebnahme des Kanals (7') in autonomer Weise sämtliche Synchronisierungsaufgaben für das Aufspüren und Verfolgen eines Satelliten unabhängig von den Mikroprozessormitteln (12) abzuarbeiten.

9. Hochfrequenzsignalempfänger nach Anspruch 7, **dadurch gekennzeichnet, dass** die Empfangs- und Formungsmittel (3) einen Zeitsignalgenerator (5) aufweisen, um jedem Kanal der Korrelationsstufe erste und zweite Zeitsignale (CLK, CLK16) über den Sperrblock (14) eines jeden Kanals zuzuführen, wobei das zweite Zeitsignal (CLK16) eine Frequenz 16 mal niedriger als die Frequenz des ersten Zeitsignals (CLK) hat.

10. Hochfrequenzsignalempfänger nach Anspruch 7, **dadurch gekennzeichnet, dass** die Mikroprozessormittel den Empfangs- und Formungsmitteln Unterbrechungssignale zuführen, um den Frequenzumwandlungsprozess der Hochfrequenzsignale periodisch zu unterbrechen.

Fig. 1

ZONE 1    ZONE 2    ZONE 3    ZONE 4

SV

OR

ZONE 5    ZONE 6    ZONE 7    ZONE 8

ZONE 9    ZONE 10    ZONE 11    ZONE 12

90°N
60°N
30°N
0
30°S
60°S
90°S

180°w  150°w  120°w  90°w  60°w  30°w  0  30°E  60°E  90°E  120°E  150°E  180°E

EP 1 628 139 B1

# Fig. 2

EP 1 628 139 B1

Fig. 3

**EP 1 628 139 B1**

## RÉFÉRENCES CITÉES DANS LA DESCRIPTION

**Documents brevets cités dans la description**

- DE 19633477